(19) Europäisches Patentamt / European Patent Office / Office européen des brevets

(11) **EP 4 701 101 A1**

(12) **EUROPEAN PATENT APPLICATION**

(43) Date of publication:
**25.02.2026  Bulletin 2026/09**

(21) Application number: **24196210.9**

(22) Date of filing: **23.08.2024**

(51) International Patent Classification (IPC):
**H04B 10/70** (2013.01)    **G01B 9/02015** (2022.01)
**G01B 9/02055** (2022.01)    **H04B 10/60** (2013.01)

(52) Cooperative Patent Classification (CPC):
**H04B 10/70; G01B 9/02027; G01B 9/02067**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Fraunhofer-Gesellschaft zur Förderung der angewandten Forschung e.V.**
  **80686 München (DE)**
- **Friedrich-Schiller-Universität Jena Körperschaft des öffentlichen Rechts**
  **07743 Jena (DE)**

(72) Inventors:
- **LEYENDECKER, Marius**
  **07745 Jena (DE)**
- **KOHOUT, Oskar**
  **07749 Jena (DE)**
- **GONZALEZ MARTIN DEL CAMPO, Luis Javier**
  **07747 Jena (DE)**

(74) Representative: **Louis Pöhlau Lohrentz**
**Patentanwälte**
**Merianstrasse 26**
**90409 Nürnberg (DE)**

(54) **OPTICAL MULTI-CHANNEL PHASE STABILIZATION FOR PROGRAMMABLE INTERFEROMETERS**

(57)    A method of operating a multi-channel optical interferometer (13, 17) with at least n+1 channels is suggested such that for performing phase stabilization or phase tuning the n channels corresponding to n input channels and n output channels and the at least one spare channel is set up as common reference channel (32) that is interfering with each of the n channels.

For phase tuning and/or phase stabilization at least one phase modulator (10) is located at the input of each of the n input channels and an individual control signal for each of the n channels is generated by demodulation of a signal based on the reference channel (32) with an individual phase-locked-loop (PLL) (31) for each of the n channels and processing the demodulated signal into a control signal and feedback the control signal to the phase modulator (10) of the corresponding input channel.

Figur 1

**Description**

The present invention provides a method of operating an optical multi-channel interferometer according to the preamble of claim 1 and a system for phase tuning and/or phase stabilization of an optical multi-channel interferometer according to the preamble of claim 6.

Programmable optical interferometers are used in the field of optical communication, optical quantum information and signal processing. Particularly programmable optical interferometers are used in various applications including telecommunications, sensing, and quantum computing.

Optical multi-channel interferometers are the key component for optical quantum computation like Boson Sampling, Scattershot Boson Sampling and Gaussian Boson sampling. While the first two mentioned concepts do not rely on phase stability on the input channels before the interferometer, their scalability is limited. Gaussian Boson Sampling on the other hand is a promising candidate for a scalable architecture for photonic quantum computation which involves programmable interferometers with a phase stable input of quantum states.

Document EP 4 123 257 A1 describes a method of phase tuning and stabilization for a Mach-Zehnder-Interferometer. Phase stabilization is achieved by feeding back a control signal to a moving element of the interferometer. In order to achieve phase stabilization, direct access to the Mach-Zehnder interferometer is necessary. With more complex interferometers, direct access to each of the interferometers is often not possible or requires a great deal of design effort.

The object of the present invention is to provide a precise and flexible system and method for phase tuning and phase stabilization, which is also suitable for complex multi-channel interferometers. Preferably, a system and method are to be provided which enables precise phase tuning and phase stabilization without the need for direct access to the interferometer structure. In particular, the system and the method should be suitable for multi-channel interferometers readily available on the market.

According to the invention, this task is solved by a method according to the features of claim 1.

According to the invention, a method of operating an optical multi-channel interferometer, providing an optical interferometer, preferably an optical interferometer used for optical quantum computation or optical communication is provided, with at least n channels, corresponding to n input channels and n output channels, or with at least n+1 channels, corresponding to n input channels and n output channels and at least one spare channel. According to the invention the following steps are performed:

- setup one of the n channels as a common reference channel that is interfering with each of the n channels, or setup the spare channel as a reference channel that is interfering with each of the n channels,
- providing at least one phase modulator at the input of each of the n input channels,
- performing phase stabilization and/or phase tuning by generating an individual control signal for each of the n channels by demodulation of a signal based on the reference channel with an individual phase-locked-loop (PLL) for each of the n channels,
- processing the demodulated signal into a control signal and feedback the control signal to the phase modulator of the corresponding input channel.

An advantage is that the invention is suitable for stabilizing the phase of commercially available integrated interferometers, preferably commercially available programmable multi-channel interferometers. Such interferometers are for example commercially available from Quix Quantum® BV.

Another advantage is that the invention is suitable for free space coupled interferometers, and especially suitable for fibre coupled interferometers. Fibre coupled interferometers are quite sensitive for environmentally induced phase noise in the input fibres, and therefore in need of a precise and robust phase stabilization and/or phase tuning.

Another advantage is that phase stabilization and/or phase tuning of the invention is without the need of adding additional optical components on the die of the interferometer, or potentially lossy WDMs right before the chip coupling.

Another advantage is that the invention is without undue design effort suitable for multi-channel interferometers with a high number of channels

A further advantageous effect of the invention, as the practical tests have shown, is that the relative phases of the input ports can be set arbitrarily. This does not affect the stability of the phase stabilization and/or phase tuning.

Here, n is an integer natural number n greater than or equal to 2 ($n \geq 2$ ; $n = integer$). The upper limit of the number of n channels is limited by the bandwidth of the phase modulators divided by the phase noise bandwidth. For applications with a standard bandwidth, the upper limit of n can be 200 or 500. For narrowband applications, the upper limit of n can be 1000 or preferably 1500. The more bandwidth is required per channel, the smaller the upper limit of the n channels becomes.

Preferably a signal based on the reference channel means that either the output of the reference channel is detected, especially with a photodetector, and this detected signal is used as a base for processing the control signal, and/or that the reference channel is fed with a reference signal that is detected at the output on each of the n output channels especially with a photodetector, and this detected signal is used as a base for processing the control signal. Since the reference channel interferes with each of the n channels, the reference channel works in both ways.

Preferably, the reference channel interferes with each of the n channels means that a certain portion or fraction of each of the n channels is taken and interferes with the reference channel or vice versa. The reference channel can be a Tapoff channel. The reference channel may be a common reference channel in the meaning that one single reference channel is used for the n channels.

In a preferred embodiment, the signal of one of the n output channels can be detected by a photodetector. Alternatively or additionally, the signal of the reference channel can be detected by a photodetector. As photodetector a photodiode, or an avalanche-photodiode, or a single-photon detector, or a superconducting nanowire can be used.

In a preferred embodiment, the demodulated signal can be generated by mixing the detected signal of the reference channel by means of the individual phase-locked-loop (PLL) with a local oscillator whose frequency is determined for the corresponding channel. Especially, individual phase-locked loop (PLL) means that an individual phase-locked loop (PLL) is provided for each of the n channels. Preferably, each phase-locked loop (PLL) comprises a local oscillator or is connected to a local oscillator. The local oscillator can act as a reference oscillator for the dedicated channel.

In another preferred embodiment, the demodulated signal can be generated by mixing the detected signal of the output of each one of the n channels by means of the individual phase-locked-loop (PLL) with the signal of a common oscillator, and feeding the reference channel by a reference laser via a phase modulator, the phase modulator being modulated by the common oscillator. Especially, individual phase-locked-loop (PLL) means that an individual phase-locked-loop (PLL) is provided for each of the n channels. Preferably the common oscillator is a single oscillator that is connected with each of the individual phase-locked-loops (PLL) and the phase modulator of the reference laser. The common oscillator can act as a reference oscillator for the setup.

In a preferred embodiment the phase-locked-loop (PLL) can comprise a mixer for mixing the signal of one of the photodetectors with the signal of the local oscillator or with the signal of the common oscillator, and wherein preferably the demodulation of the signal is performed by averaging, or by low-pass filtering, or by integrating over time.

The object of the invention is further achieved by a system for phase tuning and/or phase stabilization of an optical multi-channel interferometer, preferably used for optical quantum computation or optical communication, whereby the system comprises:

- an optical interferometer with at least n channels, corresponding to n input channels and n output channels, or with at least n+1 channels, corresponding to n input channels and n output channels and at least one spare channel,
- at least one phase modulator at the input of each input channel,

and for each of the n channels an individual stabilization electronics comprising a phase-locked-loop (PLL) with a mixer for generating a control signal.

According to the invention, one of the n channels is configured as a common reference channel that is interfering with each of the other n channels, or the spare channel is configured as a reference channel that is interfering with each of the n channels,

the stabilization electronics is configured to perform phase stabilization and/or phase tuning by generating an individual control signal for each of the n channels by demodulation of a signal based on the reference channel with the phase-locked-loop (PLL) for each of the n channels, and whereby the stabilization electronics is configured to process the demodulated signal into a control signal and feedback the control signal to the phase modulator of the corresponding input channel.

Preferably, the phase stabilization and/or phase tuning can be performed if the individual stabilization electronics generates a control signal with the individual phase-locked-loop (PLL) for each of the n channels based on the reference channel and feedback the control signal to the phase modulator of the corresponding input channel.

Preferably, the individual stabilization electronics means that an individual stabilization electronics comprising an individual phase-locked-loop (PLL) is provided for each of the n channels. The individual stabilization electronics can each be designed as a discrete assembly, a module, or an integrated circuit. As a stabilization base, the individual phase-locked-loop (PLL) can be connected to a local oscillator each, or the individual phase-locked-loop (PLL) can be connected to a common oscillator.

In a preferred embodiment, the output of the common reference channel comprises a photodetector for detecting the output signal, and whereby each individual phase-locked-loop (PLL) is fed by a local oscillator having a frequency determined for the corresponding channel for generating the demodulated signal by mixing the detected signal of the reference channel with the signal of the local oscillator.

In another preferred embodiment, the outputs of the n output channels each comprises a photodetector for detecting the output signal and wherein each individual phase-locked-loop (PLL) of one of these n output channels is fed by a common oscillator and generates the demodulated signal by mixing the detected signal of the corresponding photodetector with the signal of the common oscillator. Preferably, a reference laser and a phase modulator are located at the input of the reference channel in such a way that the reference laser feeds the reference channel via the phase modulator, whereby the phase modulator is modulated by the common oscillator.

Preferably, one or more or all the photodetectors can be a photodiode, a single photon detector e.g. (SNSPDs), or an avalanche photodiode (APD), or a superconducting nanowire.

In a preferred embodiment, the individual stabilization electronics comprises a filter for filtering the signal from the phase-locked-loop (PLL). Preferably, the filter can be a low-pass filter, or an integrator, or an average. The individual stabilization electronics can supply the filtered signal to the at least one phase modulator of the corresponding channel. Alternatively or additionally, the individual stabilization electronics can comprise a PID (Proportional-Integral-Differential) controller for processing the demodulated signal or the filtered signal into the control signal, so that the filtered signal is processed through the PID before feeding the at least one phase modulator of the corresponding channel.

Preferably, the filter can be an analog filter, or an active filter, or a digital filter.

Preferably, the PID controller (Proportional-Integral-Differential) controller can be an analog controller, or a digital controller, or implemented per software on a microprocessor, e.g. a RISC processor.

In a preferred embodiment, the interference between the common reference channel and the n channels is adjusted such that a dedicated fraction T from each of the n input channels interferes with the common reference channel. Preferably, fraction T can be the same for all channels. In an alternative embodiment, the fraction T must not necessarily be the same for all channels. The fraction T can be different for some of the n channels or for all of the n channels.

The optical interferometer can be a programmable optical interferometer, preferably a programmable multi-channel optical interferometer, that is described by a unitary n x n matrix. Alternatively or additionally, the optical interferometer can be a fiber-coupled optical interferometer.

An advantageous aspect of the invention is that the unitary n x n matrix that describes the interferometer is adjusted such that a portion of the light from the input channels interferes on a dedicated output channel. Phase modulators are placed before each input channel, which induce small phase modulations at different modulation frequencies. By mixing the detected signal from the dedicated output channel with a local oscillator, a control signal can be generated for each input channel individually. This control signal is then used to stabilize the relative phases of the input channels.

Another advantageous aspect of the invention is that the unitary on the interferometer can be different depending on the wavelength of the reference laser, which might be deviating from the wavelength for the light for which the interferometer is used. The accuracy for the phase locking is expected to work best for the same wavelength between reference laser and the wavelength of the input light but is not limited to be the same wavelength. Any inaccuracies arising from having different wavelengths could be compensated by proper calibration of unitary deviations between the 2 wavelengths for the given setup. This can also be used within this invention to lock on a wavelength different from the target wavelength. This can be used to generate a reference channel at the reference wavelength (reference laser) while keeping the targeted unitary at target wavelength exact.

One preferred aspect of the invention is that in order to relatively stabilize the input phases, from each input phase a control signal is to be derived in order to lock it to a reference. In case of fibre coupling, or in order to circumvent fibre passages that need to be passively stabilized in a challenging environment between the phase stable integrated chip and the point where the input light interferes with the reference light, the implemented unitary of the programmable interferometer itself is used to interfere the different channels with a common reference path. This saves resources and is readily implementable, especially also on commercially available multi-channel interferometers.

As another advantageous aspect of the invention, several spatially separated chips can be phase stabilized among each other without a lot of additional resources or changing the architecture of the chip design. The only resources required are additional phase modulators on each input channel, a dedicated output channel of the already available programmable interferometric chip, a suitable photodetector, e.g. a photodiode, and phase-locked-loop (PLL) control electronics.

In a preferred embodiment, the control signal is amplitude modulated with a signal derived from the local oscillator before feeding the control signal to a phase modulator, preferably such that the individual stabilization electronics comprises an adder for performing an amplitude modulation by adding the signal of the local oscillator to the control signal.

Preferably, an input channel can comprise more than one phase modulators, preferably a first phase modulator and a second phase modulator, which are configured such that the control signal is supplied to the first phase modulator and the signal of the local oscillator is supplied to the second phase modulator or vice versa. This means that the phase modulators can be multiple and the dithering signal from the oscillator and the control signal can be put separately on different phase modulators on the same input line. This might be advantageous to split up one slow phase modulator with a long phase range and a fast phase modulator, which might have a smaller phase range and less sensitive to introduced phase noise by electronic noise on the input of the phase modulator.

Preferably, one or more or all the phase modulators can be electro-optic modulators, or acousto-optic modulators (AOMs), or fiber stretchers, or a combination thereof. The phase modulators can be external phase modulators in the input line of one of the channels. Alternatively or additionally, internal phase modulators of the optical multi-channel interferometer can be used.

An advantage is that the system can comprise two or more optical multi-channel interferometers, preferably that the two or more optical interferometers are interconnected by optical fiber.

Another advantageous aspect of the invention is that the method and the system are working for pulsed reference lasers and continuous wave reference lasers.

Concerning pulsed reference lasers, the repetition rate of the pulsed laser needs to be at least twice the phase noise bandwidth. It is to be considered that the repetition rate of the pulsed reference laser limits phase noise bandwidth. Preferably, the pulse width needs to be long enough to stabilize. In principle, at least two different operation modes of the pulsed laser can be used. One mode is quasi CW operation. This is to achieve quasi CW (Continuous Wave) stabilization with short gating (turning off) of the reference laser. Another mode is to use short pulses (short means that the width of a pulse does not need to be at least the stabilization time). The pulses can be averaged over time during detection or by signal processing or by sample and hold technique. Preferably, if the stabilization is not working on the zero crossing of the control signal, it is advantageous to apply a sample and hold scheme recording the peak of each pulse and hold it.

Another advantageous aspect of the invention is that all stabilization schemes can be operated in copropagating direction and also in backpropagation. This can be especially useful for a two-interferometer configuration. In the preferred scheme, the reference would have to be injected at some point in counter-propagation and split away from the copropagating direction, which will induce a non-common path. But it could still be useful to stabilize at least some section of the path.

All advantages and features and definitions described herein for the method also apply to the device and vice versa.

In the following, an example of an interferometer configuration is described:

The interferometer according to this invention has n input channels and n output channels, described by a unitary n x n matrix. Preferably, this matrix is fully programmable. To achieve stabilization, one output is reserved to obtain an interference signal. This means an interferometer described by a unitary matrix of up to dimension n + 1 with the number of stabilized channels to n can be stabilized.

For this example, a n x n unitary $U_{target}$ is described. Without loss of generality the procedure here is shown for an example with n = 4. The four input channels will be interfered on a fifth channel, whereby the fifth channel is the common reference channel. The number of channels can be increased arbitrarily and is only limited by the bandwidth of noise and phase modulators.

$$U_{\text{target}} = \begin{pmatrix} U_{11} & U_{12} & U_{13} & U_{14} \\ U_{21} & U_{22} & U_{23} & U_{24} \\ U_{31} & U_{32} & U_{33} & U_{34} \\ U_{41} & U_{42} & U_{43} & U_{44} \end{pmatrix} \qquad (1)$$

For the tap off of the reference channel and interference on the reference channel 5 we extend 1 with a row $\sqrt{T}$.

$$M_{\text{tapoff}} = \begin{pmatrix} U_{11} & U_{12} & U_{13} & U_{14} \\ U_{21} & U_{22} & U_{23} & U_{24} \\ U_{31} & U_{32} & U_{33} & U_{34} \\ U_{41} & U_{42} & U_{43} & U_{44} \\ \sqrt{T} \cdot e^{i\beta_1} & \sqrt{T} \cdot e^{i\beta_2} & \sqrt{T} \cdot e^{i\beta_3} & \sqrt{T} \cdot e^{i\beta_4} \end{pmatrix} \qquad (2)$$

The matrix $M_{\text{tapoff}}$ is unphysical in the sense that it does not obey energy conservation and the unitarity property, but it maps the 4 input fields on a fifth output and interferes the fields with a corresponding phase shift $\beta_i$.

For electric input fields $\vec{E}_k = e^{i\omega t + \alpha_k}$ where k denotes the input channel.

The output field on channel 5 (the common reference channel) would be:

$$\vec{E}_{\text{out5}} = \sum_{k=1}^{n} M_{\text{tapoff5}k} \vec{E}_k$$

Here T is the fraction of the tap off, which is taken from the input channels to interfere on the dedicated channel, which is called the common reference channel and β is the phase transformation of the input channel phases to the reference channel.

The goal is to obtain a unitary that approximates $M_{\text{tapoff}}$ very well. In order to obtain again a unitary that can be programmed on the interferometer again the following procedure is performed:

The unitary is retrieved to set in the interferometer chip from equation (2) by performing a singular value decomposition:

$$M_{\text{tapoff}} = W \Sigma V^* \qquad (3)$$

whereas W is a (n+1)x(n+1) unitary matrix and V* is a n x n unitary matrix. Σ is a (n+1)xn rectangular diagonal matrix.

To obtain a (n+1)x(n+1) unitary is extended V* with

$$\tilde{V}^* = \begin{pmatrix} V^* & 0 \\ 0 & 1 \end{pmatrix} \qquad (4)$$

which is a (n+1)x(n+1) unitary.

The additional dimension corresponds to the fifth channel input, or reference channel input, which is not connected and therefore corresponds to the vacuum state, by setting E5 = 0 it is seen that this extension does not alter the vector transformation in the subspace of channels 1 to n. It can be checked that the transformation of the first n channels corresponds up till now to the transformation of the targeted unitary.

The new unitary will now be approximated by replacing Σ by (n+1)x(n+1) identity. The new unitary is now $U_{\text{new}} = W\tilde{V}^*$.

This is very similar to Löwdin symmetric orthogonalization, just slightly adapted for unsymmetric matrices. It can be checked numerically how well the approximation works in dependence of T by calculating the fidelity of $U_{\text{target}}$ with the corresponding submatrix of $U_{\text{new}}$.

It can be imposed an individual phase on the last row of eq 2 which can be used to set a certain relative phase setting of the input ports, which can be used to set the relative phases in the stabilization scheme. In the end the accuracy with which the input phases can be set depends on the accuracy with which $U_{\text{new}}$ can be implemented on the chip including the phase settings.

With the input 5 (reference channel) set to E5 = 0 the field on output 5 is:

$$\vec{E}_{\text{out5}} = \sum_{i=1}^{n} A \cdot e^{i(\omega t + \alpha_i + \beta_i)}$$

which is the field required to obtain the signal for the phase control loop control signal. Due to the approximation A deviates from √T, however it turns out that the amplitude from each channel is the same and the phase $\beta_i$ is not altered.

In the following, an example of intensity calculation for Modulated Light Fields (up to second order in ε) is described:

In this example, the k light fields on output channel 5 with the same amplitude A and different phases $\phi_i$ (I = 1, 2, ... , k) are calculated. Each field is subject to a small phase modulation with modulation depth ε and unique modulation frequency $\Omega_i$. The electric field of the i-th light field can be written as:

$$E_i(t) = A e^{i(\omega t + \phi_i + \epsilon \sin(\Omega_i t))}$$

Each $E_i(t)$ is related to the input field $E_i^{inp}(t)$ on channel i

$$E_i^{inp}(t) = A_{\text{in}} e^{i(\omega t + \alpha_i + \epsilon \sin(\Omega_i t))}$$

$$E_i(t) = \sqrt{\tilde{T}} e^{i \cdot \beta_i} E_i^{inp}(t)$$

with $\alpha_i$ being the phase of the input field on channel i and $\beta_i$ being the phase shift introduced by the modified tapoff unitary in the interferometer and $\tilde{T}$ being the tapoff ratio after approximating the tapoff unitary. It is defined:

$$\Phi_i = \alpha_i + \beta_i$$

Using the expansion of the exponential function for small $\epsilon$ up to the second order:

$$e^{i\epsilon \sin(\Omega_i t)} \approx 1 + i\epsilon \sin(\Omega_i t) - \frac{\epsilon^2}{2} \sin^2(\Omega_i t)$$

Thus, the electric field can be approximated as:

$$E_i(t) \approx A e^{i(\omega t + \phi_i)} \left( 1 + i\epsilon \sin(\Omega_i t) - \frac{\epsilon^2}{2} \sin^2(\Omega_i t) \right)$$

$$E_i(t) \approx A e^{i(\omega t + \phi_i)} + i A \epsilon e^{i(\omega t + \phi_i)} \sin(\Omega_i t) - \frac{A\epsilon^2}{2} e^{i(\omega t + \phi_i)} \sin^2(\Omega_i t)$$

Now, the total electric field which we identify with the output field on the reference channel (in our example this is channel 5) Es(t) from the interference of k such fields is:

$$E_s(t) = \sum_{i=1}^{k} E_i(t)$$

$$E_s(t) = \sum_{i=1}^{k} \left( A e^{i(\omega t + \phi_i)} + i A \epsilon e^{i(\omega t + \phi_i)} \sin(\Omega_i t) - \frac{A\epsilon^2}{2} e^{i(\omega t + \phi_i)} \sin^2(\Omega_i t) \right)$$

$$E_s(t) = A \sum_{i=1}^{k} e^{i(\omega t + \phi_i)} + i A \epsilon \sum_{i=1}^{k} e^{i(\omega t + \phi_i)} \sin(\Omega_i t) - \frac{A\epsilon^2}{2} \sum_{i=1}^{k} e^{i(\omega t + \phi_i)} \sin^2(\Omega_i t)$$

$$E_s(t) = A e^{i\omega t} \left( \sum_{i=1}^{k} e^{i\phi_i} + i\epsilon \sum_{i=1}^{k} e^{i\phi_i} \sin(\Omega_i t) - \frac{\epsilon^2}{2} \sum_{i=1}^{k} e^{i\phi_i} \sin^2(\Omega_i t) \right)$$

Let

$$S = \sum_{i=1}^{k} e^{i\phi_i}.$$

Thus.

$$E_s(t) = Ae^{i\omega t}\left(S + i\epsilon \sum_{i=1}^{k} e^{i\phi_i}\sin(\Omega_i t) - \frac{\epsilon^2}{2}\sum_{i=1}^{k} e^{i\phi_i}\sin^2(\Omega_i t)\right)$$

The intensity I(t) is given by the square of the magnitude of the total electric field:

$$I(t) = |E_s(t)|^2 = \left|Ae^{i\omega t}\left(S + i\epsilon \sum_{i=1}^{k} e^{i\phi_i}\sin(\Omega_i t) - \frac{\epsilon^2}{2}\sum_{i=1}^{k} e^{i\phi_i}\sin^2(\Omega_i t)\right)\right|^2$$

First, note that:

$$|e^{i\omega t}|^2 = 1$$

$$|S|^2 = SS^*$$

Expanding the magnitude squared term:

$$I(t) = A^2 \left|S + i\epsilon \sum_{i=1}^{k} e^{i\phi_i}\sin(\Omega_i t) - \frac{\epsilon^2}{2}\sum_{i=1}^{k} e^{i\phi_i}\sin^2(\Omega_i t)\right|^2$$

Using the expansion:

$$|a + b|^2 = |a|^2 + |b|^2 + 2\Re(a^*b)$$

where a = S and

$$b = i\epsilon \sum_{i=1}^{k} e^{i\phi_i}\sin(\Omega_i t) - \frac{\epsilon^2}{2}\sum_{i=1}^{k} e^{i\phi_i}\sin^2(\Omega_i t)$$

First-order term:

$$2\Re\left(S^* \cdot \left(i\epsilon \sum_{i=1}^{k} e^{i\phi_i}\sin(\Omega_i t)\right)\right) = \epsilon \sum_{i=1}^{k} \Im\left(S^* e^{i\phi_i}\right)\sin(\Omega_i t)$$

Second-order term includes:

$$\left|i\epsilon \sum_{i=1}^{k} e^{i\phi_i}\sin(\Omega_i t)\right|^2 = -\epsilon^2 \sum_{i=1}^{k} \sin^2(\Omega_i t) + \epsilon^2 \sum_{i=1}^{k}\sum_{j=1,j\neq i}^{k} \Im\left(e^{i(\phi_i - \phi_j)}\right)\sin(\Omega_i t)\sin(\Omega_j t)$$

Combining the terms:

$$I(t) \approx A^2 \left( |S|^2 + \epsilon \sum_{i=1}^{k} \Im \left( S^* e^{i\phi_i} \right) \sin(\Omega_i t) \right.$$
$$\left. + \epsilon^2 \sum_{i=1}^{k} \left( -\frac{\sin^2(\Omega_i t)}{2} + \sum_{j=1,j\neq i}^{k} \Im \left( S^* e^{i\phi_i} e^{i\phi_j} \right) \sin(\Omega_i t) \sin(\Omega_j t) \right) \right)$$

Therefore, the intensity to the second order in ε is:

$$I(t) \approx A^2 |S|^2 + A^2 \epsilon \sum_{i=1}^{k} \Im \left( S^* e^{i\phi_i} \right) \sin(\Omega_i t)$$
$$+ A^2 \epsilon^2 \left( \sum_{i=1}^{k} \sum_{j=1,j\neq i}^{k} \Im \left( e^{i(\phi_i - \phi_j)} \right) \sin(\Omega_i t) \sin(\Omega_j t) - \frac{1}{2} \sum_{i=1}^{k} \sin^2(\Omega_i t) \right)$$

The second order term contains the contributions with the mixing terms of the different modulation frequencies, which generate sum and difference frequencies which might lead to crosstalk between the channels in the stabilization scheme.

As ε is required to be a small modulation and these terms are in the order of $\epsilon^2$, we are going to neglect these terms from now on. Here they are just shown for completeness. The relevant term for stabilization is:

$$I(t) \approx A^2 |S|^2 + A^2 \epsilon \sum_{i=1}^{k} \Im \left( S^* e^{i\phi_i} \right) \sin(\Omega_i t)$$

The photodetector signal is proportional to this term.

By mixing the photodetector signal with the electrical local oscillator signal of channel i and subsequent low-pass filtering we obtain a signal

$$F_i \propto \Im \left( S^* e^{i\phi_i} \right) = |S| sin(\phi_i - \phi_{\text{ref}})$$

which is used as the input into the feedback (PID) controller which generates a feedback control signal to control this signal to be on a reference value, which we choose to be Fi = 0 but is not limited to be zero. Therefore, we can control the input phases to fulfill the relations βi +αi = 0 or βi +αi = π (or respective values for Fi = const) for all i, which is the goal of this invention. The value S of the reference field depend themselves on the phases of all interfering fields. In the steady state during stabilization each Φi is either equal to 0 or π (or to to values determined by Fi = const), depending on whether the control signal after the PID is giving negative feedback on the positive or negative slope of the control signal.

The invention can be used in but is not limited to the field of optical communication, optical quantum information and signal processing, particularly to programmable optical interferometers used in various applications including telecommunications, sensing, and quantum computing.

Possible applications of the invention are shown in the figures and described below. They show:

Fig. 1:    An example of a standard setup configuration of an optical multi-channel interferometer according to the invention;

Fig. 2:    An example of the stabilization electronics;

Fig. 3:    An alternative example of a setup with one modulated input reference laser;

Fig. 4:    An example for stabilization of two interferometer chips.

The examples shown in the figures are possible applications of the invention and are provided for explanatory purposes. They are not intended to be restrictive. It is clear to the skilled person that they can modify the examples shown within the scope of protection defined by the claims and combine features with one another without departing from the scope of the invention. In the figures, identical or similarly acting components are marked with the same reference symbols.

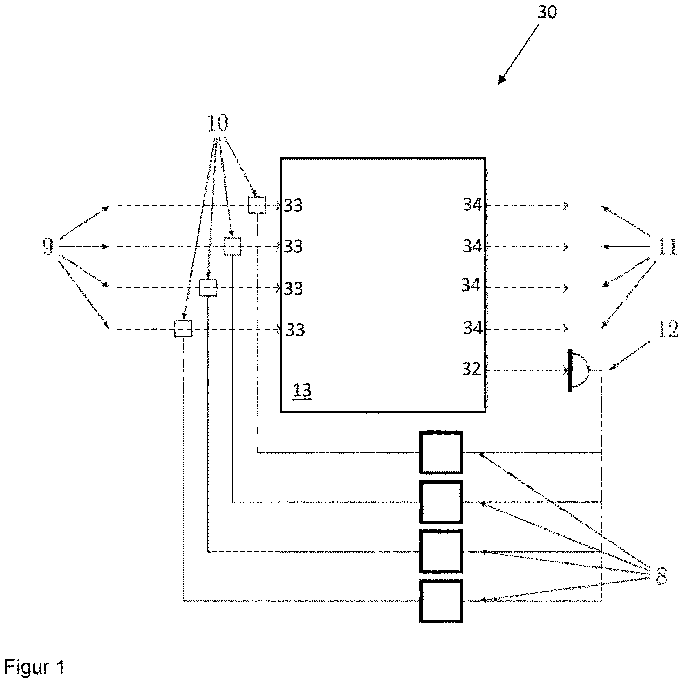

Figure 1 shows a schematic representation of an embodiment of the invention. Figure 1 shows a system 30 for phase tuning and/or phase stabilization of a programmable optical multi-channel interferometer chip 13. The multi-channel interferometer 13 provides n + 1 channels, in this example 4 +1 channels; n is an integer natural number n greater than or equal to 2 ($n \geq 2$ ; $n = integer$).

Accordingly, the multi-channel interferometer 13 has n = 4 input channels 33 and n = 4 output channels 34. The number of channels can vary. The upper limit of the number of n channels is limited by the phase noise and the required bandwidth. For applications with a usual bandwidth, the upper limit of n can be 200 or 500. For narrowband applications, the upper limit of n can be 1000 or preferably 1500. The more bandwidth is required per channel, the smaller the upper limit of the n channels becomes.

At each of the 4 input channels 33, a phase modulator 10 is located. The input channels 33 are fed with coherent light 9 from a laser (the laser is not shown in Fig. 1). The input channels can be connected via fiber optics or free space.

The 4 output channels 34 lead to 4 outputs 11 and can be connected via fiber optics or free space.

At the output of the reference channel 32 a photodetector 12 is located for detecting the signal of the reference channel 32. The photodetector 12 can be a photodiode, or a single-photon detector, or a superconducting nanowire.

The detected signal of the reference channel 32 is processed separately for each of the n = 4 channels via its own stabilization electronics 8 to form a control signal. The control signal for each of the n channels is fed back to the phase modulator 10 at the input of each input channel 33.

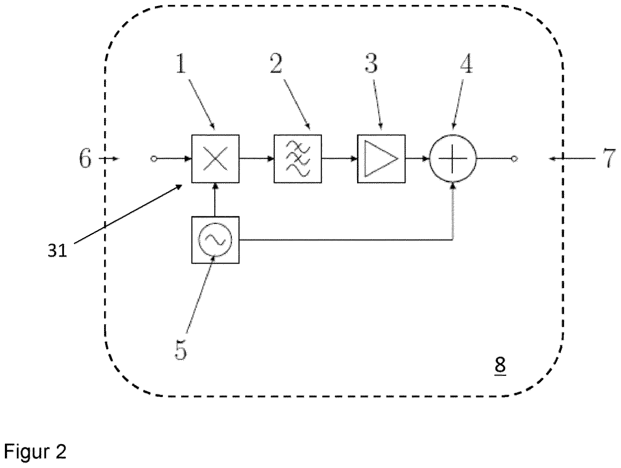

An example of the individual stabilization electronic 8 is shown in figure 2. Figure 2 shows an electronic stabilization and control unit (SCU) for one interferometer input channel 33.

The stabilization electronics 8 comprises a phase-locked-loop (PLL) 31 with a mixer 1. It further comprises a local oscillator 5, a filter 2, a PID-controller 3 and an adder 4.

The local oscillator 5 works as a stabilization base for the phase-locked-loop (PLL) 31. Alternatively, an external stabilization base with a common oscillator 24 or a shared oscillator 24 can be connected to the mixer 1 of the phase-locked-loop (PLL) 31. If the PLL 31 is connected to a shared oscillator, the local oscillator can be canceled.

The filter 2 can be a low-pass filter. The PID-controller 3 can be in an alternative setup another controller, e.g. a PD-controller.

The adder 4 performs a small amplitude modulation of the output signal of the stabilization electronics 8 with the local oscillator 5. That means the optical phase of the input channels are dithered with the signal of the local oscillator 5.

The function of the stabilization electronics 8 is as follows. Figure 1 and 2 are showing that an electronic input signal labeled with 6 derived from the photodetector 12 is set on one input on the mixer 1. The second input of each mixer 1 is the electronic local oscillator 5 with a dedicated frequency for the corresponding input channel 33, which can be mixed with an adjustable phase relation between the two channels.

The output of each mixer 1 is further processed by averaging, low-pass filtering or integrating over time or a similar method with the filter 2 in order to obtain a signal encoding the relative optical phase information of the input channel relative to a common reference. This produces a demodulated signal that serves as the input to an electronic control unit 3 (here the PID controller 3) transforming the signal to a control signal whose output is added in the adder 4 with a small amplitude modulation signal derived from the same electronic local oscillator 5. The added signal is the control signal output 7 that is supposed to be directed to the driver of the phase modulator 10 (or directly to the phase modulator 10) of the respective channel 33 to be stabilized.

The function of the interferometer setup as shown in figure 1 is as follows: To the n inputs 33 to the interferometer 13 (possibly pulsed) coherent light is injected, which is interfered by the set unitary in the interferometer 13 to n output 34 channels + 1 reference channel 32 or tapoff channel 32. The set unitary in the interferometer is the target unitary, which is modified by the procedure as described herein above.

The light on the reference channel 32 is detected with the photodetector 12 (photodiode or single photon detector) and fed to the input of the stabilization electronics 8, which demodulates the signal for each of the n channels and creates a control signal or control signal for the phase modulators 10 of each of the n channels to close the feedback loop to control the phase to a set reference.

Alternatively, the phase modulators 10 can be multiple and the dithering signal from the oscillator 5 and the control signal can be put separately on different phase modulators on the same input line 33. This might be advantageous to split up one slow phase modulator with a long phase range and a fast modulator, which might have a smaller phase range and less sensitive to introduced phase noise by electronic noise on the input of the phase modulator. In this example, the adder 4 may be skipped.

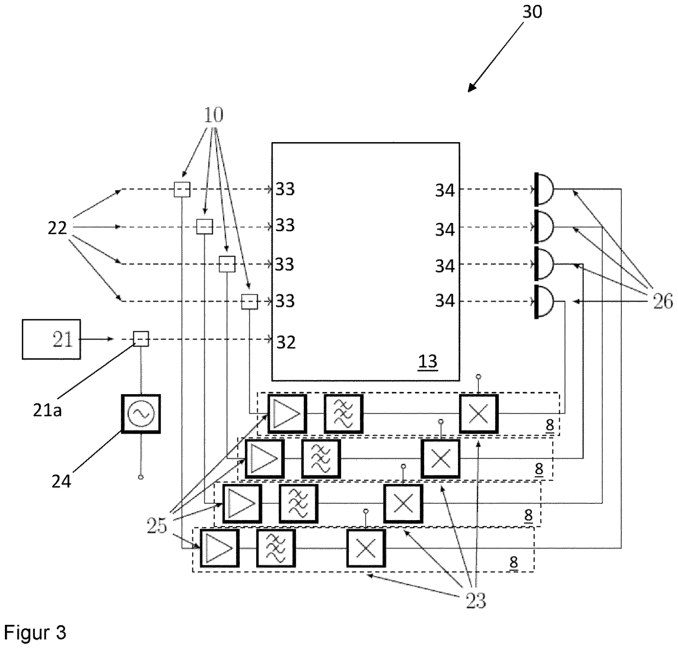

Figure 3 shows another schematic representation of an embodiment of the invention. Figure 3 shows a system 30 for phase tuning and/or phase stabilization of a programmable optical multi-channel interferometer chip 13. It can be the same multi-channel interferometer chip 13 as in figure 1.

The multi-channel interferometer chip 13 provides again n = 4 + 1 channels. This means 4 input channels 33, 4 output channels 34 and one spare channel which is set up as reference channel 32. At each of the output channels 34 a photodetector 12 is located. The photodetector 12 can be a photodiode, or a single-photon detector, or a superconducting nanowire. For each of the n channels 34, the signal detected by the photodetector 12 is fed into the stabilization electronics 8.

The stabilization electronics 8 in this example is an alternative embodiment to figure 2. Here, it lacks a local oscillator and an adder. Instead, the PLL 31 with the mixer 23 is fed by a shared oscillator 24. The output of the mixer 23 is processed through a filter 2 and a controller 3 as in figure 2 and fed back as a control signal to the phase modulators 10 at the input of each of the input channels 33.

The light of a reference laser 21 is fed via a phase modulator 21a into the reference channel 32. The phase modulator 21a is driven by the shared oscillator 24 to dither the signal. The reference laser 21 can be a pulsed laser or continuous wave (CW).

The function of this setup in figure 3 describes that instead of distinguishing each channel by modulating each with another frequency, it is also possible to introduce a reference laser 21 on the reference channel 32 and modulate it with a shared oscillator 24. The generation of the control signal can then be performed by demodulating the detected signal on each output 34 with the shared oscillator and low-pass filtering. This can also be performed if some part of the output was split off with beam splitters before the photodetectors 26.

It is also possible to stabilize two or more interferometers with this invention.

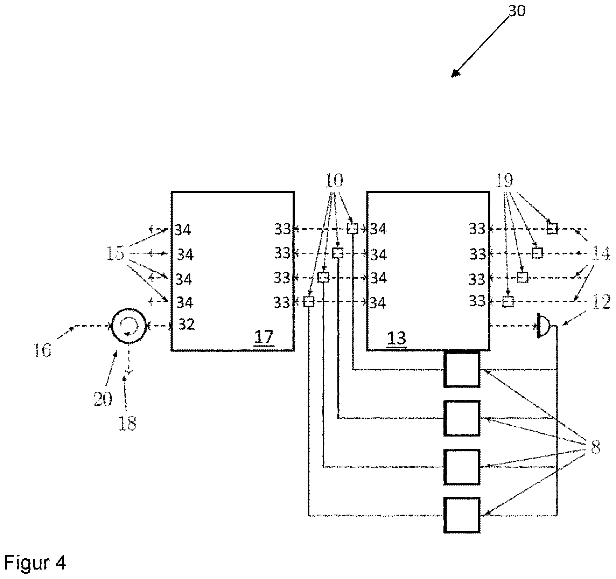

Figure 4 describes an example setup with two multi-channel interferometer chips 13 and 17, connected via optical fibre or free space. As in the examples before, each of the two multi-channel interferometer chips 13 and 17 provides n = 4 + 1 channels, which means four input channels 33 and four output channels 34 and one reference channel 32 each. In the connection lines between the outputs 34 of the first interferometer chip 13 and the inputs 33 of the second interferometer chip 17, phase modulators 10 are located.

Optional or additionally, phase modulators 19 can be located at each of the input channels 33 of the first interferometer chip 13.

The setup of the multi-channel interferometer chip 13 is based on the example of figure 1. The control signal can be processed via the stabilization electronics 8 on the base of the reference channel 32 of the first interferometer chip 13, detecting the output signal with the photodetector 12. The feedback of the control signal can be fed to the phase modulators 10 in order to stabilize the inputs 33 of the second interferometer chip 17, or optional to the phase modulators 19 in order to stabilize the inputs 33 of the first interferometer chip 13.

Optional or additionally, the control signal can be processed via the stabilization electronics 8 on the base of the reference channel 32 of the second interferometer chip 17 via detecting the signal of the stabilization output 18.

The setup of the second interferometer chip 17 is based on the example shown in figure 3, as the reference channel 32 is fed with a reference laser 16 in a counter-propagation direction via a circulator 20. The circulator 20 is located at the input of the reference channel 32 of the second interferometer chip 17 and branches of the stabilization signal 18.

With this invention it is possible to have more than one interferometer, or more than two interferometers stabilized. The more than one interferometer, or more than two interferometers can be connected with possibly long optical fibres among each other. These fibres are also prone to phase noise, which can be actively stabilized with this invention.

The connecting optical fibres between the two chips can be stabilized by splitting up a reference laser 16 in interferometer 17 by introducing the reference in the reference channel 32 (output) in a counterpropagating manner and apply the stabilization scheme for chip 13 as described in figure 1. The tapoff unitary on second interferometer chip 17 is analogously designed as for the standard configuration.

Optionally or additionally, the input channels 33 on the interferometer 13 can be additionally stabilized analogously to the setup as described in figure 1 by taking the optical feedback signal out of a circulator 20 before introducing the counterpropagating reference laser 16. Alternatively, the feedback signal can be extracted from the reference channel 32 (output) of the interferometer 13.

The stabilization scheme can also be implemented in a copropagating manner. This can be achieved by replacing the photodetector 12 with a reference laser that is coupled into the interferometer 13 in a copropagating direction. The optical feedback signal 18 can be extracted after the circulator 20 or directly out of the interferometer 17 before the circulator 20.

Reference signs

1      Mixer
2      Low-Pass Filter
3      PID (Proportional-Integral-Differential) Controller
4      Adder
5      Oscillator
6      Input from photodetector
7      Output to phase modulator
8      Stabilization electronics (SCO)
9      Coherent light input / Quantum light input

10      Phase modulator
11      Output of Interferometer
12      Photodetector at reference channel output
13      Programmable optical multi-channel interferometer
14      Coherent light input / Quantum light input
15      Output of interferometer 2
16      Coherent reference laser counter-propagation direction
17      Second programmable optical multichannel interferometer
18      Optional reference output to stabilize input to interferometer
19      Optional phase modulators to stabilize input to interferometer

20      Circulator
21      Reference laser input
21a    Phase modulator for reference laser
22      Interferometer input
23      Mixer with shared oscillator
24      Common oscillator / shared oscillator
25      Low-pass filter + PID controller
26      Output photodetectors

30      System for phase tuning and/or phase stabilization of an optical multi-channel interferometer
31      PLL phase-locked-loop
32      reference channel
33      Interferometer inputs
34      Interferometer outputs

**Claims**

1.  Method of operating an optical multi-channel interferometer, providing an optical interferometer (13, 17), preferably an optical interferometer used for optical quantum computation or optical communication,

      with at least n channels, corresponding to n input channels (33) and n output channels (34),
      or with at least n +1 channels, corresponding to n input channels (33) and n output channels (34) and at least one spare channel,
      **characterized by** the steps of:

            - setup one of the n channels as a common reference channel (32) that is interfering with each of the n channels,

      or setup the spare channel as a common reference channel (32) that is interfering with each of the n channels,

            - providing at least one phase modulator (10) at the input of each of the n input channels,
            - performing phase stabilization and/or phase tuning by generating an individual control signal for each of the n channels by demodulation of a signal based on the reference channel (32) with an individual phase-locked-loop (PLL) (31) for each of the n channels,
            - processing the demodulated signal into a control signal and feedback the control signal to the phase modulator (10) of the corresponding input channel.

**2.** Method according to claim 1,
**characterized by**
detecting the signal of one of the n output channels (34), and/or the signal of the reference channel (32) by a photodetector (12, 26), preferably a photodiode, or a single-photon detector, or a superconducting nanowire.

**3.** Method according to claim 1 or 2,
**characterized by**
generating the demodulated signal by mixing the detected signal of the reference channel (32) by means of the individual phase-locked-loop (PLL) (31) with a local oscillator (5) whose frequency is determined for the corresponding channel.

**4.** Method according to claim 1 or 2,
**characterized by**
generating the demodulated signal by mixing the detected signal of the output of each one of the n channels (34) by means of the individual phase-locked-loop (PLL) (31) with the signal of a common oscillator (24), and feeding the reference channel (32) by a reference laser (21) via a phase modulator (21a), the phase modulator (21a) being modulated by the common oscillator (24).

**5.** Method according to any one of the preceding claims,
**characterized in that**
the phase-locked-loop (PLL) (31) comprises a mixer (1) for mixing the signal of one of the photodetectors (12, 26) with the signal of the local oscillator (5) or with the signal of the common oscillator (24), and wherein preferably the demodulation of the signal is performed by averaging, or by low-pass filtering, or by integrating over time.

**6.** System (30) for phase tuning and/or phase stabilization of an optical multi-channel interferometer, preferably used for optical quantum computation or optical communication, preferably performing a method according to one of the claims 1 to 5, whereby the system comprises:

- an optical interferometer (13, 17) with at least n channels, corresponding to n input channels (33) and n output channels (34), or with at least n+1 channels, corresponding to n input channels (33) and n output channels (34) and at least one spare channel,
- at least one phase modulator (10) at the input of each input channel, for each of the n channels an individual stabilization electronics (8) comprising a phase-locked-loop (PLL) (31) with a mixer (1, 23) for generating a control signal,
**characterized in that**

one of the n channels is configured as a common reference channel (32) that is interfering with each of the other n channels, or that the spare channel is configured as a common reference channel (32) that is interfering with each of the n channels,
the stabilization electronics (8) is configured to perform phase stabilization and/or phase tuning by generating an individual control signal for each of the n channels by demodulation of a signal based on the reference channel (32) with the phase-locked-loop (PLL) (31) for each of the n channels, and whereby the stabilization electronics (8) is configured to process the demodulated signal into a control signal and feedback the control signal to the phase modulator (10) of the corresponding input channel.

**7.** System according to claim 6,
**characterized in that**
the output of the common reference channel (32) comprises a photodetector (12) for detecting the output signal, and whereby each individual phase-locked-loop (PLL) (31) is fed by a local oscillator (5) having a frequency determined for the corresponding channel for generating the demodulated signal by mixing the detected signal of the reference channel (32) with the signal of the local oscillator (5).

**8.** System according to claim 6,
**characterized in that**
the outputs of the n output channels (34) each comprises a photodetector (26) for detecting the output signal and wherein each individual phase-locked-loop (PLL) (31) of one of these n output channels (34) is fed by a common oscillator (24) and generates the demodulated signal by mixing the detected signal of the corresponding photodetector (26) with the signal of the common oscillator (24).

9. System according to claim 8,
**characterized in that**
a reference laser (21) and a phase modulator (21a) are located at the input of the reference channel (32) in such a way that the reference laser (21) feeds the reference channel via the phase modulator (21a), whereby the phase modulator (21a) is modulated by the common oscillator (24).

10. System according to one of claims 6 to 9,
**characterized in that**
the individual stabilization electronics (8) comprises a filter (2) for filtering the signal from the phase-locked-loop (PLL) (31), preferably a low-pass filter or an integrator or an averager, and supplying the filtered signal to the at least one phase modulator (10) of the corresponding channel, and/or wherein the individual stabilization electronics (8) comprises a PID controller (3) for processing the demodulated signal or the filtered signal into the control signal.

11. System according to one of claims 6 to 10, preferably system performing the method of any one of claims 1 to 5 according to any one of claims 6 to 10,
**characterized in that**
the interference between the common reference channel (32) and the n channels is adjusted such that a dedicated fraction T from each of the n input channels interferes with the common reference channel (32).

12. System according to one of claims 6 to 11, preferably system performing the method of any one of claims 1 to 5 according to any one of claims 6 to 11,
**characterized in that**
the optical interferometer (13, 17) is a programmable optical interferometer (13, 17) that is described by a unitary n x n matrix, and/or that the optical interferometer (13, 17) is a fiber-coupled optical interferometer.

13. System according to one of claims 6 to 12, preferably system performing the method of any one of claims 1 to 5 according to any one of claims 6 to 12,
**characterized in that**
the control signal is amplitude modulated with a signal derived from the local oscillator (5) before feeding the control signal to a phase modulator (10), preferably such that the individual stabilization electronics (8) comprises an adder (4) for performing an amplitude modulation by adding the signal of the local oscillator (5) to the control signal.

14. System according to one of claims 6 to 13, preferably system performing the method of any one of claims 1 to 5 according to any one of claims 6 to 13,
**characterized in that**
an input channel (33) comprises more than one phase modulator (10), preferably a first phase modulator and a second phase modulator, which are configured such that the control signal is supplied to the first phase modulator and the signal of the local oscillator (5) is supplied to the second phase modulator or vice versa.

15. System according to one of claims 6 to 14, preferably system performing the method of any one of claims 1 to 5 according to any one of claims 6 to 14,
**characterized in that**
the system (30) comprises two or more optical multi-channel interferometers (13, 17), preferably that the two or more optical interferometers (13, 17) are interconnected by optical fiber.

Figur 1

Figur 2

Figur 3

Figur 4

## EUROPEAN SEARCH REPORT

Europäisches
Patentamt
European
Patent Office
Office européen
des brevets

**Application Number**

EP 24 19 6210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NGUYEN THANH DONG ET AL: "Stability and Resolution of a Conventional Displacement Measuring Heterodyne Interferometer Using a Single Phase-Locked Loop", EXPERIMENTAL MECHANICS, 1 June 2023 (2023-06-01), pages 1015-1032, XP093238389, New York ISSN: 0014-4851, DOI: 10.1007/s11340-023-00970-x Retrieved from the Internet: URL:https://link.springer.com/article/10.1007/s11340-023-00970-x/fulltext.html [retrieved on 2025-01-11] * figure 2 * * page 1017 - page 1020 * ----- | 1-3,5-7, 10 | INV. H04B10/70 G01B9/02015 G01B9/02055 H04B10/60 |
| Y | Zhou Tong ET AL: "Coherent Combining of Optical Pulses in Spatial, Spectral and Time Domains", Dissertation, 31 December 2015 (2015-12-31), pages 1-168, XP055816564, Retrieved from the Internet: URL:https://deepblue.lib.umich.edu/bitstream/handle/2027.42/113462/tongzhou_1.pdf?sequence=1 [retrieved on 2021-06-22] * Sections 2.1, 2.3, 3.1, 3.2, 4.1 * ----- -/-- | 1-15 | **TECHNICAL FIELDS SEARCHED (IPC)** H04B G01B |

The present search report has been drawn up for all claims

| Place of search | Date of completion of the search | Examiner |
|---|---|---|
| The Hague | 12 January 2025 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 24 19 6210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LIU HESHAN ET AL: "Multi-channel phasemeter and its application in the heterodyne laser interferometry", SCIENCE CHINA TECHNOLOGICAL SCIENCES, SCIENCE CHINA PRESS, HEIDELBERG, vol. 58, no. 4, 30 January 2015 (2015-01-30), pages 746-749, XP035475712, ISSN: 1674-7321, DOI: 10.1007/S11431-015-5770-Y [retrieved on 2015-01-30] * Section 3 * ----- | 1-15 | |
| A | GB 2 623 747 A (TOSHIBA KK [JP]) 1 May 2024 (2024-05-01) * paragraph [0031] * * paragraph [0091] - paragraph [0094] * * paragraph [0107] - paragraph [0109] * * paragraph [0113] - paragraph [0115] * * paragraph [0127] - paragraph [0133] * ----- | 1-15 | |
| A,D | EP 4 123 257 A1 (FRAUNHOFER GES FORSCHUNG [DE]) 25 January 2023 (2023-01-25) * paragraph [0055] - paragraph [0060] * * paragraph [0120] - paragraph [0121] * ----- | 1,6 | TECHNICAL FIELDS SEARCHED (IPC) |
| A | US 2016/245639 A1 (MOWER JACOB C [US] ET AL) 25 August 2016 (2016-08-25) * figures 1-14B * ----- | 1,6 | |
| A | EP 3 441 711 B1 (HONEYWELL INT INC [US]) 23 October 2019 (2019-10-23) * abstract * ----- | 1,6 | |
| A | US 2022/051124 A1 (BRADLER KAMIL [CA] ET AL) 17 February 2022 (2022-02-17) * paragraph [0004] * ----- | 1,6 | |

-/--

The present search report has been drawn up for all claims

| Place of search | Date of completion of the search | Examiner |
|---|---|---|
| The Hague | 12 January 2025 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 19 6210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Pound-Drever-Hall technique - Wikipedia", , 7 May 2024 (2024-05-07), pages 1-6, XP093238386, Retrieved from the Internet: URL:https://en.wikipedia.org/wiki/Pound-Drever-Hall_technique [retrieved on 2025-01-11] * the whole document * ----- | 1,6 | |

**TECHNICAL FIELDS SEARCHED (IPC)**

The present search report has been drawn up for all claims

| Place of search | Date of completion of the search | Examiner |
|---|---|---|
| The Hague | 12 January 2025 | Votini, Stefano |

EPO FORM 1503 03.82 (P04C01)

page 3 of 3

## ANNEX TO THE EUROPEAN SEARCH REPORT
## ON EUROPEAN PATENT APPLICATION NO.

EP 24 19 6210

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2025

| Patent document cited in search report | | Publication date | Patent family member(s) | | Publication date |
|---|---|---|---|---|---|
| GB 2623747 | A | 01-05-2024 | GB | 2623747 A | 01-05-2024 |
| | | | JP | 2024060573 A | 02-05-2024 |
| EP 4123257 | A1 | 25-01-2023 | DK | 4123257 T3 | 28-10-2024 |
| | | | EP | 4123257 A1 | 25-01-2023 |
| US 2016245639 | A1 | 25-08-2016 | US | 2015354938 A1 | 10-12-2015 |
| | | | US | 2016245639 A1 | 25-08-2016 |
| | | | US | 2018274900 A1 | 27-09-2018 |
| | | | US | 2019310070 A1 | 10-10-2019 |
| | | | WO | 2016028363 A2 | 25-02-2016 |
| EP 3441711 | B1 | 23-10-2019 | EP | 3441711 A1 | 13-02-2019 |
| | | | US | 2019049312 A1 | 14-02-2019 |
| US 2022051124 | A1 | 17-02-2022 | CA | 3139835 A1 | 26-11-2020 |
| | | | CN | 113853563 A | 28-12-2021 |
| | | | EP | 3973366 A1 | 30-03-2022 |
| | | | JP | 7590346 B2 | 26-11-2024 |
| | | | JP | 2022533053 A | 21-07-2022 |
| | | | US | 2022051124 A1 | 17-02-2022 |
| | | | US | 2023177374 A1 | 08-06-2023 |
| | | | WO | 2020232546 A1 | 26-11-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4123257 A1